# FASCICULE DE BREVET EUROPEEN

(11) **EP 3 849 713 B1**
(45) Date de publication et mention de la délivrance du brevet: **28.06.2023**
(21) Numéro de dépôt: 19765279.5
(22) Date de dépôt: 11.09.2019
(51) Int. Cl.: B06B 1/02, B06B 1/06, G01S 15/89

(54) **DISPOSITIF D'IMAGERIE ULTRASONORE**
ULTRASCHALLBILDGEBUNGSVORRICHTUNG
ULTRASOUND IMAGING DEVICE

(30) Priorité: 13.09.2018 FR 1858199
(43) Date de publication de la demande: 21.07.2021
(73) Titulaire: Moduleus, 37100 Tours (FR)
(72) Inventeur: BAILLY, Adrien, 38000 Grenoble (FR)
(74) Mandataire: Cabinet Beaumont
(86) Numéro de dépôt international: PCT/EP2019/074280
(87) Numéro de publication internationale: WO 2020/053309

(56) Documents cités:
- EP-A2- 1 491 913
- WO-A1-03/000137
- US-A- 6 111 816
- US-A1- 2009 005 684
- US-A1- 2014 155 751

## Description

### Domaine technique

La présente description concerne le domaine de l'imagerie ultrasonore, et vise plus particulièrement un dispositif d'imagerie ultrasonore comportant une pluralité de transducteurs ultrasonores et un circuit électronique de commande de ces transducteurs.

### Technique antérieure

Un dispositif d'imagerie ultrasonore comprend classiquement une pluralité de transducteurs ultrasonores, et un circuit électronique de commande connecté aux transducteurs. En fonctionnement, l'ensemble des transducteurs est disposé face à un corps dont on souhaite acquérir une image. Le circuit électronique de commande est configuré pour appliquer des signaux électriques d'excitation aux transducteurs, de façon à provoquer l'émission d'ondes ultrasonores par les transducteurs, en direction du corps à analyser. Les ondes ultrasonores émises par les transducteurs sont réfléchies par le corps à analyser (par sa structure interne et/ou superficielle), puis reviennent vers les transducteurs qui les convertissent à nouveau en signaux électriques. Ces signaux électriques de réponse sont lus par le circuit électronique de commande, et peuvent être mémorisés et analysés pour en déduire des informations sur le corps étudié.

Les transducteurs ultrasonores peuvent être disposés en barrette dans le cas de dispositifs d'acquisition d'images bidimensionnelles, ou en matrice dans le cas de dispositifs d'acquisition d'images tridimensionnelles. Dans le cas d'un dispositif d'acquisition d'images bidimensionnelles, l'image acquise est représentative d'une coupe du corps étudié dans un plan défini par l'axe d'alignement des transducteurs de la barrette d'une part, et par la direction d'émission des transducteurs d'autre part. Dans le cas d'un dispositif d'acquisition d'images tridimensionnelles, l'image acquise est représentative d'un volume défini par les deux directions d'alignement des transducteurs de la matrice et par la direction d'émission des transducteurs.

On s'intéresse ici plus particulièrement aux dispositifs d'acquisition d'images tridimensionnelles. Dans de tels dispositifs, le nombre de transducteurs ultrasonores peut être très élevé, typiquement de plusieurs centaines à plusieurs milliers, voire supérieur. Ceci pose des difficultés pour la réalisation du circuit électronique de commande des transducteurs et/ou pour la transmission des données acquises à un système de traitement extérieur

On a déjà proposé des dispositifs d'acquisition d'images ultrasonores tridimensionnelles dans lesquels le circuit électronique de commande comprend un nombre de circuits d'émission et/ou de réception inférieur au nombre de transducteurs, et des circuits de multiplexage commandés de façon que, lors d'une phase d'acquisition d'une image ultrasonore, différents transducteurs partagent un même circuit d'émission et/ou de réception. Ceci permet de limiter l'encombrement du circuit électronique de commande, et de faciliter la transmission et le traitement des données acquises. Les dispositifs connus présentent toutefois des limitations, liées notamment aux possibilités limitées de configuration des liaisons entre la matrice de transducteurs et les circuits d'émission et/ou de réception du dispositif.

Le document US 2014/0155751 décrit par exemple un dispositif d'imagerie ultrasonore comprenant une pluralité de transducteurs ultrasonores agencés en une matrice qui est divisée en une pluralité de sous-matrices de transducteurs voisins. Le dispositif comporte, pour chaque sous-matrice : un unique circuit d'émission et/ou de réception et un circuit sélecteur combineur et/ou sélecteur répartiteur configurable pour relier l'un quelconque, seul, des transducteurs de la sous-matrice au circuit d'émission et/ou de réception de la sous-matrice, ou pour relier simultanément plusieurs des transducteurs de la sous-matrice au circuit d'émission et/ou de réception de la sous-matrice. Le dispositif comportant en outre un circuit de contrôle pour commander individuellement les circuits sélecteurs combineurs et/ou sélecteurs répartiteurs des différentes sous-matrices.

### Résumé de l'invention

Un objet d'un mode de réalisation est de prévoir un dispositif d'acquisition d'images ultrasonores tridimensionnelles palliant tout ou partie des inconvénients des dispositifs connus.

Pour cela, un mode de réalisation prévoit un dispositif d'imagerie ultrasonore comportant une pluralité de transducteurs ultrasonores agencés en une matrice de plusieurs rangées (Ri) et plusieurs colonnes (Cj), la matrice étant divisée en une pluralité de sous-matrices de transducteurs voisins comportant chacune m rangées et n colonnes, avec m et n entiers supérieurs ou égaux à 2, le dispositif comportant, pour chaque sous-matrice :-un unique circuit d'émission et/ou de réception ; et- un circuit sélecteur combineur et/ou sélecteur répartiteur configurable pour relier l'un quelconque, seul, des transducteurs de la sous-matrice au circuit d'émission et/ou de réception de la sous-matrice, ou pour relier simultanément plusieurs des transducteurs de la sous-matrice au circuit d'émission et/ou de réception de la sous-matrice ,le dispositif comportant en outre un circuit de contrôle (CTRL) adapté à commander individuellement les circuits sélecteurs combineurs et/ou sélecteurs répartiteurs des différentes sous-matrices,dans lequel le circuit de contrôle (CTRL) est configuré pour, lors d'une phase d'acquisition d'une image ultrasonore d'un premier type, acquérir successivement m* n images partielles d'un corps à analyser, puis reconstruire l'image à partir des m* n images partielles acquises,le circuit de contrôle (CTRL) étant configuré pour, à chaque acquisition d'une image partielle, dans chaque sous-matrice, relier au circuit d'émission et/ou de réception de la sous-matrice un unique transducteur sélectionné parmi les m* n transducteurs de la sous-matrice, et pour modifier le transducteur sélectionné dans chaque sous-matrice à chaque nouvelle acquisition d'une image partielle de façon à balayer les m* n transducteurs de chaque sous-matrice.

Selon un mode de réalisation, le circuit de contrôle est configuré pour, lors d'une phase d'acquisition d'une image ultrasonore d'un deuxième type, commander les circuits sélecteurs combineurs et/ou sélecteurs répartiteurs pour, simultanément :
- dans une première sous-matrice, relier un unique transducteur de la sous-matrice au circuit d'émission et/ou de réception de la sous-matrice ; et
- dans une deuxième sous-matrice, relier plusieurs transducteurs de la sous-matrice au circuit d'émission et/ou de réception de la sous-matrice.

Selon un mode de réalisation, le circuit de contrôle est configuré pour, lors d'une phase d'acquisition d'une image ultrasonore d'un troisième type, commander les circuits sélecteurs combineurs et/ou sélecteurs répartiteurs pour, dans chaque sous-matrice, relier simultanément tous les transducteurs de la sous-matrice au circuit d'émission et/ou de réception de la sous-matrice.

Selon un mode de réalisation, le circuit de contrôle est configuré pour, lors d'une phase d'acquisition d'une image ultrasonore d'un quatrième type, commander les circuits sélecteurs combineurs et/ou sélecteurs répartiteurs pour, dans chaque sous-matrice, successivement :
- relier simultanément tous les transducteurs d'une même colonne de la sous-matrice au circuit d'émission et/ou de réception de la sous-matrice et isoler simultanément les autres transducteurs de la sous-matrice du circuit d'émission et/ou de réception de la sous-matrice ;
- relier simultanément tous les transducteurs d'une même rangée de la sous-matrice au circuit d'émission et/ou de réception de la sous-matrice et isoler simultanément les autres transducteurs de la sous-matrice du circuit d'émission et/ou de réception de la sous-matrice ; et
- relier simultanément tous les transducteurs d'une même diagonale de la sous-matrice au circuit d'émission et/ou de réception de la sous-matrice et isoler simultanément les autres transducteurs de la sous-matrice du circuit d'émission et/ou de réception de la sous-matrice.

Selon un mode de réalisation, chaque circuit d'émission et/ou de réception comprend un circuit d'émission et un circuit de réception.

Selon un mode de réalisation, pour chaque sous-matrice, le circuit sélecteur combineur et/ou sélecteur répartiteur comprend un sélecteur répartiteur d'émission de une borne d'entrée vers m*n bornes de sortie, et un sélecteur combineur de réception de m*n bornes d'entrée vers une borne de sortie, et :
- la borne d'entrée du sélecteur répartiteur d'émission est reliée à une borne de sortie du circuit d'émission ;
- les m*n bornes de sortie du sélecteur répartiteur d'émission sont reliées respectivement aux m*n transducteurs de la sous-matrice ;
- les m*n bornes d'entrée du sélecteur combineur de réception sont reliées respectivement aux m*n transducteurs de la sous-matrice ; et
- la borne de sortie du sélecteur combineur de réception est reliée à une borne d'entrée du circuit de réception.

Selon un mode de réalisation, dans chaque circuit sélecteur répartiteur, les m*n bornes de sortie du sélecteur répartiteur d'émission sont reliées aux m*n transducteurs de la sous-matrice par respectivement m*n interrupteurs d'émission, et, dans chaque circuit sélecteur combineur, les m*n bornes d'entrée du sélecteur combineur de réception sont reliées aux m*n transducteurs de la sous-matrice par respectivement m*n interrupteurs de réception.

Selon un mode de réalisation, dans chaque circuit sélecteur répartiteur, les m*n bornes d'entrée du sélecteur combineur de réception sont en outre reliées aux m*n transducteurs de la sous-matrice par respectivement m*n préamplificateurs.

Selon un mode de réalisation, le circuit de contrôle est configuré pour commander les circuits sélecteurs combineurs et/ou sélecteurs répartiteurs de façon à, lors d'une phase d'acquisition d'une image ultrasonore, dans chaque sous-matrice, pendant une phase d'émission d'une onde ultrasonore, relier un premier jeu de transducteurs ultrasonores de la sous-matrice au circuit d'émission de la sous-matrice, et, pendant une phase subséquente de réception d'une onde ultrasonore, relier un deuxième jeu de transducteurs ultrasonores de la sous-matrice, différent du premier jeu, au circuit de réception de la sous-matrice.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en perspective schématique d'un exemple d'un dispositif d'acquisition d'images ultrasonores selon un mode de réalisation ;
la figure 2 illustre un exemple de configuration du dispositif de la figure 1 ;
la figure 3 illustre un autre exemple de configuration du dispositif de la figure 1 ;
la figure 4 illustre un exemple d'un procédé d'acquisition d'une image ultrasonore au moyen du dispositif de la figure 1 ;
la figure 5 illustre un autre exemple d'un procédé d'acquisition d'une image ultrasonore au moyen du dispositif de la figure 1 ;
la figure 6 illustre un autre exemple d'un procédé d'acquisition d'une image ultrasonore au moyen du dispositif de la figure 1 ;
la figure 7 illustre un autre exemple d'un procédé d'acquisition d'une image ultrasonore au moyen du dispositif de la figure 1 ;
la figure 8 illustre un autre exemple d'un procédé d'acquisition d'une image ultrasonore au moyen du dispositif de la figure 1 ;
la figure 9 illustre un autre exemple d'un procédé d'acquisition d'une image ultrasonore au moyen du dispositif de la figure 1 ; et
la figure 10 est un schéma électrique illustrant plus en détail un exemple de réalisation du dispositif de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les diverses applications que peuvent avoir les dispositifs d'imagerie décrits n'ont pas été détaillées, les modes de réalisation décrits étant compatibles avec les applications usuelles des dispositifs d'imagerie ultrasonore. De plus, les propriétés (fréquences, formes, amplitudes, etc.) des signaux électriques d'excitation appliqués par le circuit de commande aux transducteurs ultrasonores n'ont pas été détaillées, les modes de réalisation décrits étant compatibles avec les signaux d'excitation usuellement utilisés dans les systèmes d'imagerie ultrasonore, qui peuvent être choisis en fonction de l'application considérée et en particulier de la nature du corps à analyser et du type d'information que l'on cherche à acquérir. De façon similaire, les divers traitements appliqués aux signaux électriques fournis par les transducteurs ultrasonores et lus par le circuit de commande pour extraire des informations utiles sur le corps à analyser n'ont pas été détaillés, les modes de réalisation décrits étant compatibles avec les traitements usuellement utilisés dans les systèmes d'imagerie ultrasonore. De plus, la réalisation des transducteurs ultrasonores et du circuit de commande des dispositifs d'imagerie décrits n'a pas été détaillée, la réalisation détaillée de ces éléments étant à la portée de l'homme du métier à partir des indications de la présente description, en utilisant des techniques connues de réalisation de transducteur ultrasonores et de circuits électroniques.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

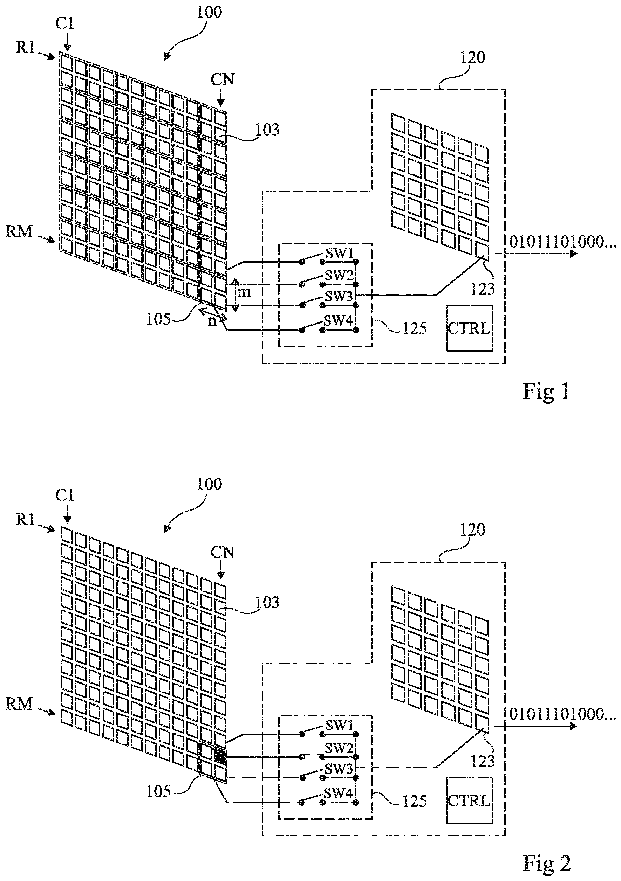

La figure 1 est une vue en perspective schématique d'un exemple d'un dispositif d'acquisition d'images ultrasonores selon un mode de réalisation.

Le dispositif de la figure 1 comprend une matrice 100 de transducteurs ultrasonores élémentaires 103, agencés selon M rangées Ri, avec i entier allant de 1 à M, et N colonnes Cj, avec j entier allant de 1 à N, M et N étant des entiers supérieurs à 1. Dans l'exemple représenté, M = N = 12. Les modes de réalisation décrits ne se limitent bien entendu pas à ce cas particulier. On notera en particulier que les valeurs M et N peuvent être différentes l'une de l'autre. Les transducteurs élémentaires 103 sont par exemple tous identiques, aux dispersions de fabrication près. Les transducteurs 103 peuvent être des transducteurs de type CMUT (transducteurs ultrasonores capacitifs à membrane), des transducteurs piézoélectriques, des transducteurs à cristal, ou tout autre type de transducteurs ultrasonores.

Dans le mode de réalisation de la figure 1, la matrice 100 est divisée en une pluralité de sous-matrices 105 de transducteurs voisins comportant chacune plusieurs rangées et plusieurs colonnes. Par transducteurs voisins, on entend ici que, dans chaque sous-matrice 105, les transducteurs 103 de la sous-matrice sont groupés, c'est-à-dire qu'aucun transducteur 103 d'une autre sous-matrice 105 n'est disposé entre deux transducteurs 103 de la sous-matrice. Autrement dit, chaque sous-matrice 105 est constituée par l'ensemble des transducteurs 103 situés à l'intersection d'un ensemble de plusieurs rangées Ri consécutives et de plusieurs colonnes Cj consécutives de la matrice 100. Dans l'exemple de la figure 1, les sous-matrices 105 ne se recouvrent pas, c'est-à-dire que chaque transducteur 103 appartient à une et une seule sous-matrice 105 du dispositif. Les sous-matrices 105 ont par exemple toutes les mêmes dimensions. Par la suite, on désigne respectivement par m et n le nombre de rangées et le nombre de colonnes de chaque sous-matrice 105, avec m et n entiers supérieurs ou égaux à 2. Dans l'exemple représenté, m=n=2. Les modes de réalisation décrits ne se limitent bien entendu pas à ce cas particulier. On notera en particulier que les valeurs m et n peuvent être différentes l'une de l'autre. De préférence, M est un multiple de m et N est un multiple de n. Ainsi, la matrice 100 est divisée en (M/m)*(N/n) sous-matrices 105 disposées selon un agencement matriciel. Dans l'exemple de la figure 1, la matrice 100 est divisée en 6x6 sous-matrices 105.

Le dispositif de la figure 1 comprend en outre un circuit électronique de commande 120 connecté aux transducteurs 103 de la matrice 100. Le circuit électronique de commande 120 comprend, pour chaque sous-matrice 105 de la matrice 100, un unique circuit d'émission et/ou de réception 123 dédié spécifiquement aux transducteurs 103 de la sous-matrice 105, et un circuit sélecteur combineur et/ou sélecteur répartiteur 125 dédié spécifiquement aux transducteurs 103 de la sous-matrice 105, configurable pour relier l'un quelconque, seul, des transducteurs de la sous-matrice 105 au circuit d'émission et/ou de réception 123, ou pour relier simultanément plusieurs des transducteurs de la sous-matrice 105 au circuit d'émission et/ou de réception 123. Ainsi, le circuit électronique de commande 120 comprend (M/m)*(N/n) circuits d'émission et/ou de réception 123, par exemple identiques ou similaires, et (M/m)*(N/n) circuits sélecteurs combineurs et/ou sélecteurs répartiteurs 125, par exemple identiques ou similaires. Chaque circuit 125 est équivalent à un sélecteur combineur de m*n entrées vers une unique sortie et/ou à un sélecteur répartiteur de une unique entrée vers m*n sorties. Par souci de simplification, un unique circuit sélecteur combineur et/ou sélecteur répartiteur 125 a été représenté sur la figure 1.

Dans l'exemple de la figure 1, chaque transducteur 103 ne peut être relié qu'au seul circuit d'émission et/ou de réception 123 associé à la sous-matrice 105 auquel il appartient. Autrement dit, les circuits sélecteurs combineurs et/ou sélecteurs répartiteurs 125 ne permettent pas de relier un transducteur 103 d'une sous-matrice 105 à un circuit d'émission et/ou de réception 123 associé à une autre sous-matrice 105, et ne permettent pas de relier entre eux des transducteurs 103 appartenant à des sous-matrices 105 différentes.

Dans l'exemple de la figure 1, le circuit 125 a été représenté de façon schématique sous la forme de m*n interrupteurs SWk, avec k entier allant de 1 à m*n, reliant respectivement en parallèle les m*n transducteurs 103 de la sous-matrice 105 à un même circuit d'émission et/ou de réception 123. Ainsi, lorsqu'un seul des interrupteurs SWk du circuit 125, est fermé, le transducteur 103 correspondant peut être excité et/ou lu individuellement par le circuit d'émission et/ou de réception 123. Cette configuration est illustrée en figure 2, dans laquelle seul l'interrupteur SW2 du circuit 125 est fermé, de sorte qu'un seul transducteur 103 (représenté en noir sur la figure 2) de la sous-matrice 105 est activé.

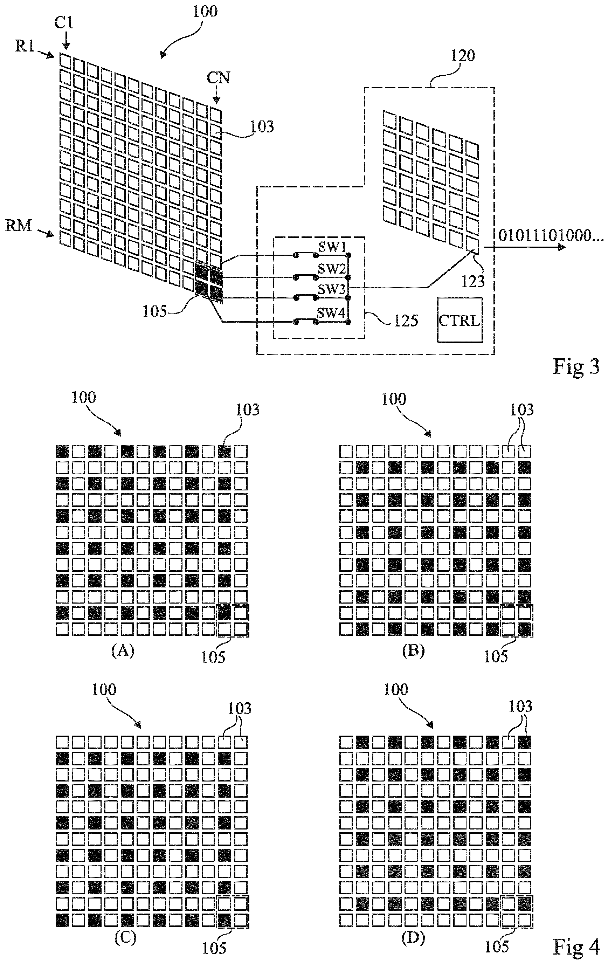

Lorsque plusieurs des interrupteurs SWk du circuit 125 sont fermés simultanément, les transducteurs 103 correspondants peuvent être excités et/ou lus simultanément par le circuit d'émission et/ou de réception 123, et agissent ainsi ensemble comme un transducteur unique de plus grande dimension. Cette configuration est illustrée par la figure 3, dans laquelle tous les interrupteurs SWk du circuit 125 sont fermés, de sorte que tous les transducteurs 103 de la sous-matrice 105 (représentés en noir sur la figure 3) sont activés simultanément.

On notera que dans le mode de réalisation de la figure 1, les (M/m)*(N/n) circuits 125 sont commandables individuellement. Autrement dit, on peut prévoir, à un même instant d'une phase d'acquisition d'une image ultrasonore, de configurer différemment des circuits sélecteurs combineurs et/ou sélecteurs répartiteurs 125 associés à des sous-matrices 105 différentes. Pour cela, le circuit électronique de commande 120 peut comporter un circuit de contrôle CTRL unique relié à des bornes de commande (non détaillées sur la figure 1) des différents circuits 125.

Un avantage du mode de réalisation de la figure 1 est que l'agencement des circuits sélecteurs combineurs et/ou sélecteurs répartiteurs 125, et plus particulièrement, la division de la matrice 100 en une pluralité de sous-matrices de transducteurs voisins reliés à un même circuit d'émission et/ou de réception via un circuit sélecteur combineur et/ou sélecteur répartiteur, permet de mettre en oeuvre diverses stratégies d'acquisition d'images ultrasonores pouvant être choisies en fonction du type de corps à analyser et/ou des informations que l'on souhaite acquérir. Des exemples de procédés d'acquisition d'images ultrasonores au moyen du dispositif de la figure 1 vont maintenant être décrits en relation avec les figures 4 à 9.

La figure 4 illustre un exemple d'un procédé d'acquisition d'une image ultrasonore au moyen du dispositif de la figure 1. Dans le procédé de la figure 4, m*n acquisitions d'images partielles sont successivement réalisées, puis une image finale est reconstruite à partir des m*n images partielles acquises. A chaque acquisition d'une image partielle, un unique transducteur 103 de chaque sous-matrice 105 est activé. Plus particulièrement, dans cet exemple, chaque acquisition d'une image partielle comprend une phase d'émission d'une onde ultrasonore suivie d'une phase de réception d'un écho de l'onde ultrasonore émise. Lors de la phase d'émission, dans chaque sous-matrice 105, un unique transducteur 103 est relié au circuit 123 associé à la sous-matrice 105, les autres transducteurs étant isolés du circuit 123. Le circuit 123 applique alors au transducteur 103 activé un signal électrique d'excitation de façon à provoquer l'émission d'une onde ultrasonore par ce seul transducteur. Lors de la phase de réception, dans chaque sous-matrice 105, le même unique transducteur 103 est relié au circuit 123 associé à la sous-matrice 105, les autres transducteurs étant isolés du circuit 123. Le circuit 123 lit alors un signal électrique représentatif d'un écho ultrasonore reçu par ce seul transducteur. A chaque nouvelle acquisition d'une image partielle, les circuits sélecteurs combineurs et/ou sélecteurs répartiteurs 125 sont reconfigurés, de façon à balayer successivement les m*n transducteurs 103 de chaque sous-matrice 105.

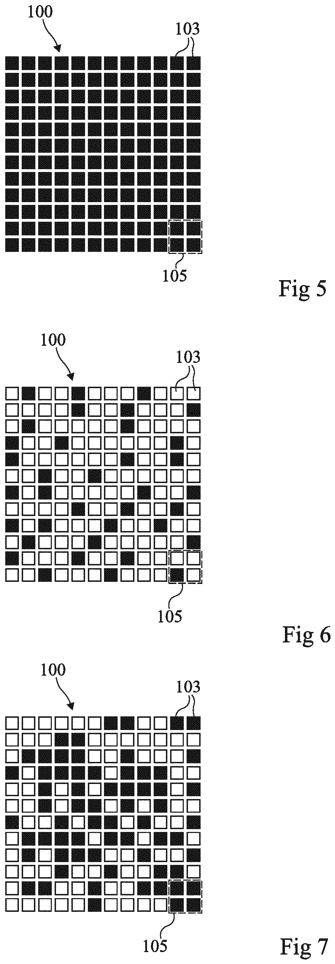

Sur la figure 4, on a représenté, à titre d'exemple illustratif, quatre vues (A), (B), (C) et (D) de la matrice 100, correspondant à quatre configurations successives des circuits 125 du dispositif lors d'une phase d'acquisition d'une image ultrasonore selon ce procédé. Sur cette figure ainsi que sur les figures 5 à 9 qui suivent, on a représenté en noir les transducteurs 103 actifs (c'est-à-dire reliés aux circuits d'émission et/ou de réception 123 via les circuits 125) et en blanc les transducteurs 103 inactifs (c'est-à-dire isolés des circuits d'émission et/ou de réception 123 par les circuits 125). On notera que dans l'exemple représenté sur la figure 4, à chaque phase d'acquisition d'une image partielle, les circuits 125 sont tous configurés de la même manière, c'est-à-dire que, à chaque phase d'acquisition d'une image partielle, la position du transducteur activé est la même dans toutes les sous-matrices 105 du dispositif. Les modes de réalisation décrits ne se limitent toutefois pas à ce cas particulier.

Un avantage du procédé d'acquisition de la figure 4 est qu'il permet d'obtenir des images de haute résolution dans la mesure où chaque transducteur 103 de la matrice est activé et lu individuellement pendant la phase d'acquisition.

A titre de variante, on pourra prévoir, à chaque acquisition d'une image partielle, lors de la phase d'émission, d'activer tous les transducteurs de chaque sous-matrice 105, et, lors de la phase de réception, d'activer un unique transducteur de chaque sous-matrice 105 comme décrit précédemment. Un avantage est que ceci permet d'envoyer plus d'énergie mécanique dans le milieu à analyser lors de l'émission, et donc d'améliorer le rapport signal sur bruit de l'image, tout en bénéficiant d'une résolution élevée dans la mesure où chaque transducteur 103 de la matrice est lu individuellement.

La figure 5 illustre un autre exemple d'un procédé d'acquisition d'une image ultrasonore au moyen du dispositif de la figure 1. Dans le procédé de la figure 5, une unique phase d'acquisition est mise en oeuvre, à l'issue de laquelle l'image finale est générée. Lors de la phase d'acquisition, les m*n transducteurs 103 de chaque sous-matrice 105 sont activés simultanément. Plus particulièrement, dans cet exemple, la phase d'acquisition comprend une phase d'émission d'une onde ultrasonore suivie d'une phase de réception d'un écho de l'onde émise. Lors de la phase d'émission, dans chaque sous-matrice 105, les m*n transducteurs 103 de la sous-matrice sont reliés simultanément au circuit 123 associé à la sous-matrice 105. Le circuit 123 applique alors à l'ensemble des transducteurs 103 de la sous-matrice un même signal électrique d'excitation de façon que chacun de ces transducteurs émette simultanément une même onde ultrasonore. Lors de la phase de réception, dans chaque sous-matrice 105, les m*n transducteurs 103 de la sous-matrice sont reliés simultanément au circuit 123 associé à la sous-matrice 105. Le circuit 123 lit alors un signal électrique représentatif de la somme des signaux électriques fournis simultanément par les m*n transducteurs 103 de la sous-matrice.

Par rapport au procédé de la figure 4, un avantage du procédé d'acquisition de la figure 5 est qu'il permet d'obtenir une image en un seul tir d'ultrasons (contre m*n tirs successifs dans l'exemple de la figure 4). De plus, la puissance ultrasonore totale émise et reçue lors de l'acquisition est plus élevée que la puissance ultrasonore totale émise et reçue lors de chaque acquisition partielle du procédé de la figure 4, ce qui peut être avantageux dans certaines applications. Ces avantages sont toutefois obtenus au détriment de la résolution de l'image finale dans la mesure où, dans l'exemple de la figure 5, la matrice 100 est en fait utilisée comme une matrice de (M/m)x(N/n) transducteurs de plus grandes dimensions.

La figure 6 illustre un autre exemple d'un procédé d'acquisition d'une image ultrasonore au moyen du dispositif de la figure 1. Dans le procédé de la figure 6, une unique phase d'acquisition est mise en oeuvre, à l'issue de laquelle l'image finale est obtenue. Lors de la phase d'acquisition, une partie ou la totalité des m*n transducteurs 103 de chaque sous-matrice 105 est désactivée. Les transducteurs 103 activés sont répartis selon un agencement irrégulier et clairsemé, par exemple selon un agencement aléatoire ou pseudo-aléatoire. Bien entendu, la répartition des transducteurs activés peut être différente de celle représentée en figure 6. Un avantage de ce type de répartition est qu'il permet d'obtenir une image relativement précise de l'objet étudié, en un seul tir d'ultrasons.

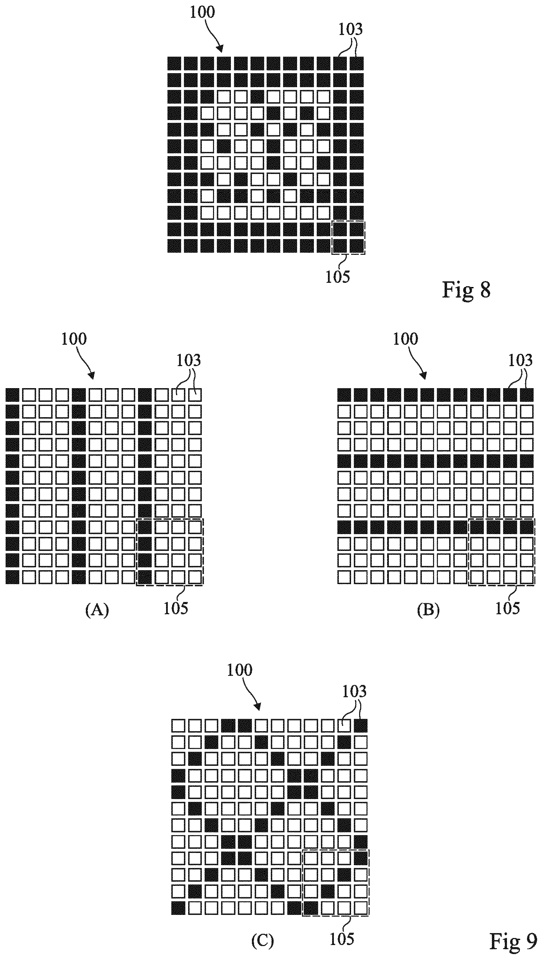

La figure 7 illustre un autre exemple d'un procédé d'acquisition d'une image ultrasonore au moyen du dispositif de la figure 1. Comme dans l'exemple de la figure 6, une unique phase d'acquisition est mise en oeuvre, à l'issue de laquelle l'image finale est obtenue. Une différence avec le procédé de la figure 6 est que, dans l'exemple de la figure 7, lors de la phase d'acquisition, dans certaines (mais pas dans la totalité) des sous-matrices 105, la totalité des m*n transducteurs 103 de la sous-matrice sont activés simultanément. Un avantage est que ceci permet, tout en conservant les avantages du procédé de la figure 6, de bénéficier d'une forte puissance ultrasonore dans certaines zones du dispositif, et ainsi d'améliorer le rapport signal sur bruit de l'image finale. Dans l'exemple de la figure 7, les sous-matrices 105 dont tous les transducteurs sont activés simultanément sont disposées selon un agencement irrégulier et clairsemé, par exemple de façon aléatoire ou pseudo-aléatoire. A titre de variante, les sous-matrices 105 dont tous les transducteurs sont activés simultanément peuvent être réparties selon une distribution régulière, par exemple dans une région périphérique de la matrice 100 comme illustré par la figure 8.

La figure 9 illustre un autre exemple d'un procédé d'acquisition d'une image ultrasonore au moyen du dispositif de la figure 1. Dans le procédé de la figure 9, trois acquisitions d'images partielles sont successivement réalisées, puis une image finale est reconstruite à partir des 3 images partielles acquises. Lors de la première phase d'acquisition d'une image partielle, dans chaque sous-matrice 105, tous les transducteurs d'une même colonne de la sous-matrice 105 sont activés simultanément, les transducteurs des autres colonnes de la sous-matrice 105 étant désactivés. Plus particulièrement, dans cet exemple, lors de la première phase d'acquisition d'une image partielle, tous les transducteurs 103 de N/n colonnes de la matrice 100, régulièrement réparties dans la matrice 100, sont activés simultanément, les transducteurs des autres colonnes de la matrice 100 étant désactivés. Lors de la deuxième phase d'acquisition d'une image partielle, dans chaque sous-matrice 105, tous les transducteurs d'une même rangée de la sous-matrice 105 sont activés simultanément, les transducteurs des autres rangées de la sous-matrice 105 étant désactivés. Plus particulièrement, dans cet exemple, lors de la première phase d'acquisition d'une image partielle, tous les transducteurs 103 de M/m rangées de la matrice 100, régulièrement réparties dans la matrice 100, sont activés simultanément, les transducteurs des autres rangées de la matrice 100 étant désactivés. Lors de la troisième phase d'acquisition d'une image partielle, dans chaque sous-matrice 105, tous les transducteurs d'une même diagonale de la sous-matrice 105 sont activés simultanément, les autres transducteurs de la sous-matrice 105 étant désactivés. On notera que dans l'exemple de la figure 9, on a considéré des sous-matrices 105 de 4x4 transducteurs 103, et non des sous-matrices 105 de 2x2 transducteurs comme dans les exemples précédents. Le procédé de la figure 9 peut toutefois bien entendu être appliqué quelle que soient les dimensions des sous-matrices 105.

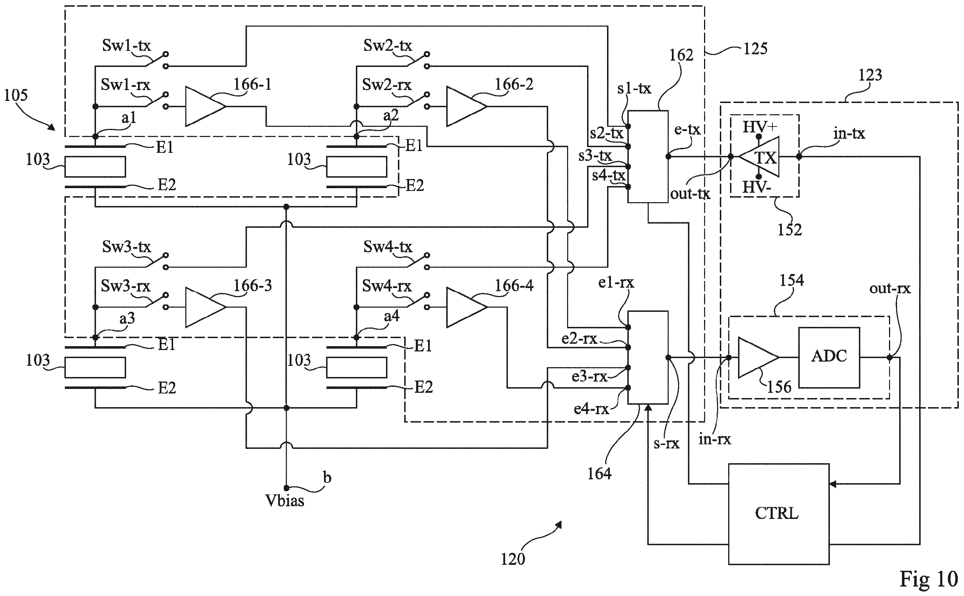

La figure 10 est un schéma électrique illustrant plus en détail un exemple de réalisation du dispositif de la figure 1. Sur la figure 10, une unique sous-matrice 105 de 2x2 transducteurs 103 est représentée, ainsi que le circuit sélecteur combineur et/ou sélecteur répartiteur 125 et le circuit d'émission/réception 123 associé, et le circuit de contrôle CTRL du circuit électronique de commande 120. Pour réaliser le circuit électronique de commande 120 complet, les circuits 125 et 123 peuvent être répliqués autant de fois qu'il y a de sous-matrices 105 dans la matrice 100. Le circuit de contrôle CTRL est quant à lui commun à tous les circuits 125 et à tous les circuits 123 du dispositif.

Chaque transducteur 103 comprend deux électrodes E1 et E2. Lorsqu'une tension d'excitation appropriée est appliquée entre ses électrodes E1 et E2, le transducteur émet une onde acoustique ultrasonore. Lorsque le transducteur reçoit une onde acoustique ultrasonore dans une certaine gamme de fréquences, il fournit entre ses électrodes E1 et E2 une tension représentative de l'onde reçue.

Chaque circuit 125 comprend m*n bornes ak (avec k entier allant de 1 à m*n) reliées, par exemple connectées, respectivement aux m*n électrodes E1 des transducteurs 103 de la sous-matrice correspondante. Les électrodes E2 des transducteurs 103 de la matrice 100 sont quant à elles toutes reliées, par exemple connectées, à une même borne b de fourniture d'une tension de polarisation continue Vbias du circuit 120.

Dans cet exemple, chaque circuit 123 comprend un circuit d'émission 152 et un circuit de réception 154.

Dans l'exemple représenté, chaque circuit d'émission 152 comprend un unique générateur d'impulsions TX. Chaque générateur d'impulsion TX comprend un noeud d'entrée in_tx adapté à recevoir un signal logique de commande, et un noeud de sortie out_tx adapté à fournir un signal électrique d'excitation aux transducteurs 103 de la sous-matrice 105 correspondante. Dans cet exemple, lorsque le signal logique appliqué sur le noeud d'entrée in_tx du générateur TX est à un premier état, par exemple un état haut, le générateur TX fournit sur son noeud de sortie out_tx une tension de niveau haut HV+, et, lorsque le signal logique appliqué sur le noeud in_tx du générateur TX est à un deuxième état, par exemple un état bas, le générateur TX fournit sur son noeud de sortie out_tx une tension de niveau bas HV-. A titre d'exemple, les tensions HV+ et HV- sont respectivement positive et négative par rapport à la tension de polarisation continue Vbias du dispositif. A titre de variante, la tension HV- est égale à la tension de polarisation Vbias, et la tension HV+ est positive par rapport à la tension Vbias. Le signal de sortie du générateur d'impulsions TX correspond à un signal d'excitation d'un ou plusieurs des transducteurs 103 de la sous-matrice 105, qui peut être appliqué sur la ou les électrodes E1 du ou des transducteurs activés par l'intermédiaire du circuit 125 lors d'une phase d'émission d'une onde ultrasonore. Le niveau de tension de ce signal d'excitation est relativement élevé, par exemple de l'ordre de 10 à 50 volts crête à crête (c'est-à-dire entre le niveau bas HV- et le niveau haut HV+). A titre d'exemple, le circuit 120 peut comprendre un convertisseur de tension continu-continu (non représenté) adapté à générer, à partir d'une tension d'alimentation (non représentée) plus faible du circuit 120, par exemple comprise entre 1 et 5 volts, les tensions d'alimentation HV+, et, le cas échéant, HV- des générateurs d'impulsions TX.

Le circuit de contrôle CTRL comprend des bornes de sortie reliées, par exemple connectées, aux noeuds d'entrée in_tx des différents générateurs d'impulsions TX. Le circuit de contrôle CTRL est adapté à appliquer des séquences logiques de commande aux différents générateurs d'impulsions TX. Le circuit de contrôle CTRL permet notamment de commander individuellement les différents générateurs d'impulsions TX, de façon simultanée ou séquentiellement. Le circuit de contrôle CTRL comprend par exemple un ou plusieurs circuits numériques de traitement ou de conditionnement (non détaillés), par exemple de type microprocesseur ou circuit logique programmable (par exemple FPGA), et un ou plusieurs circuits mémoire (non détaillés). Le circuit de contrôle CTRL est par exemple adapté à mémoriser une pluralité de scénarios prédéterminés d'excitation des transducteurs, correspondant par exemple à des fréquences d'excitations distinctes, et pouvant être sélectionnés par l'utilisateur en fonction de l'application envisagée.

Chaque circuit de réception 154 est adapté à amplifier et numériser un signal électrique représentatif de la somme des signaux électriques de réponse générés par le ou les transducteurs ultrasonores de la sous-matrice 105 activés par l'intermédiaire du circuit 125 lors d'une phase de réception d'une onde ultrasonore. Dans l'exemple de la figure 10, chaque circuit de réception 154 comprend un amplificateur 156, de préférence à faible bruit, dont l'entrée est reliée, par exemple connectée, à un noeud d'entrée in_rx du circuit 154, et un convertisseur analogique numérique ADC dont l'entrée est reliée, par exemple connectée, à la sortie de l'amplificateur 156 et dont la sortie est reliée, par exemple connectée, à un port de sortie out_rx (par exemple sur plusieurs bits) du circuit de réception 154. La sortie out_rx du circuit de réception 154 est reliée, par exemple connectée, à un port d'entrée du circuit de contrôle CTRL.

En pratique, les circuits de réception 154 peuvent comporter des éléments supplémentaires, non détaillés ici, tels qu'un circuit d'adaptation d'impédance entre le noeud d'entrée in_rx et l'entrée de l'amplificateur 156, un circuit d'ajustement de gain entre la sortie de l'amplificateur 156 et l'entrée du convertisseur ADC, et/ou un filtre analogique anti-repliement entre la sortie de l'amplificateur 156 et l'entrée du convertisseur ADC, par exemple entre la sortie du circuit d'ajustement de gain et l'entrée du convertisseur ADC. Pour plus de détails quant à la réalisation des circuits d'émission 152 et de réception 154, on pourra par exemple se référer à la demande de brevet WO2018/127655 précédemment déposée par la demanderesse.

Chaque circuit 125 est adapté, lors d'une phase d'émission d'une onde ultrasonore, à relier le noeud de sortie out_tx du circuit d'émission 152 aux électrodes E1 d'un ou plusieurs transducteurs 103 de la sous-matrice 105, et, lors d'une phase de réception d'une onde ultrasonore, à relier le noeud d'entrée in_rx du circuit de réception 156 aux électrodes E1 d'un ou plusieurs transducteurs 103 de la sous-matrice 105.

Dans l'exemple de la figure 10, chaque circuit 125 comprend un circuit sélecteur répartiteur 162 et un circuit sélecteur répartiteur 164. Le circuit 162 est un sélecteur répartiteur de une borne d'entrée e_tx vers m*n bornes de sortie sk_tx (avec k entier allant de 1 à m*n). A titre d'exemple, le circuit 162 comprend m*n interrupteurs (non détaillés sur la figure) commandables individuellement, reliant respectivement en parallèle ses m*n bornes de sortie sk_tx à sa borne d'entrée e_tx. Le circuit 164 est un sélecteur combineur de m*n bornes d'entrée ek_rx (avec k entier allant de 1 à m*n) vers une borne de sortie s_rx. A titre d'exemple, le circuit 164 comprend m*n interrupteurs (non détaillés sur la figure) commandables individuellement, reliant respectivement en parallèle ses m*n bornes d'entrée ek_rx à sa borne de sortie s_rx. Chacun des circuits 162 et 164 comprend une ou plusieurs bornes de configuration reliées, par exemple connectées, à des bornes de sortie correspondantes du circuit de contrôle CTRL.

La borne d'entrée e_tx du sélecteur répartiteur 162 est reliée, par exemple connectée, à la borne de sortie out_tx du circuit d'émission 152. La borne de sortie s_rx du sélecteur combineur 164 est reliée, par exemple connectée, à la borne d'entrée in_rx du circuit de réception 154.

Dans l'exemple de la figure 10, le circuit 125 comprend en outre m*n interrupteurs SWk_tx (avec k entier allant de 1 à m*n) reliant respectivement les m*n bornes ak aux m*n bornes de sortie sk_tx du circuit 162. Plus particulièrement, dans l'exemple représenté, pour chaque transducteur 103 de la sous-matrice 105, l'interrupteur SWk_tx correspondant a une première borne de conduction reliée, par exemple connectée, à la borne ak reliée à l'électrode E1 du transducteur, et une deuxième borne de conduction reliée, par exemple connectée, à la borne de sortie sk_tx de même rang du sélecteur répartiteur 162. Le rôle des interrupteurs SWk_tx est de permettre d'isoler les transducteurs de la voie d'émission lors d'une phase de réception d'un signal ultrasonore, pour éviter des pertes de signal dans la voie d'émission. A titre de variante, les interrupteurs SWk_tx peuvent être omis dans la mesure où, dans l'exemple de la figure 10, l'isolation entre les transducteurs et la voie d'émission peut déjà être assurée par le circuit 162. Dans ce cas, les m*n bornes ak peuvent être directement connectées aux m*n bornes de sortie sk_tx du circuit 162.

De plus, dans l'exemple de la figure 10, le circuit 125 comprend m*n interrupteurs SWk_rx (avec k entier allant de 1 à m*n) reliant respectivement les m*n bornes ak aux m*n bornes d'entrée ek_rx du sélecteur combineur 164. Dans l'exemple représenté, le circuit 125 comprend en outre m*n préamplificateurs 166_k (avec k entier allant de 1 à m*n) placés respectivement en série avec les m*n interrupteurs SWk_rx, entre les bornes ak et ek_rx. Plus particulièrement, dans l'exemple représenté, pour chaque transducteur 103 de la sous-matrice 105, l'interrupteur SWk_rx correspondant a une première borne de conduction reliée, par exemple connectée, à la borne ak reliée à l'électrode E1 du transducteur, et une deuxième borne de conduction reliée, par exemple connectée, à une borne d'entrée de l'amplificateur 166_k de même rang k. De plus, l'amplificateur 166_k a une borne de sortie reliée, par exemple connectée, à la borne d'entrée ek_rx de même rang k du sélecteur combineur 164. Dans l'exemple de la figure 10, dans la mesure où un préamplificateur 166_k est prévu en amont de chacune des entrées ek_rx du circuit 162, le sélecteur combineur 164 comprend de préférence un sommateur de tension à entrées multiples sélectionnables, adapté à fournir sur la borne s_rx une tension égale à la somme des tensions appliquées sur les bornes d'entrée ek_rx sélectionnées. A titre de variante, les préamplificateurs 166_k peuvent être omis, auquel cas chaque interrupteur SWk_rx a sa deuxième borne de conduction reliée directement à la borne d'entrée ek_rx correspondante du sélecteur combineur 164. Dans ce cas, le sélecteur combineur 164 peut être constitué simplement de m*n interrupteurs commandables individuellement, reliant respectivement en parallèle ses m*n bornes d'entrée ek_rx à sa borne de sortie s_rx.

On notera que dans l'exemple de la figure 10, le rôle des interrupteurs SWk_rx est essentiellement de protéger la voie de réception, et notamment les préamplificateurs 166_k, le sélecteur combineur 164, et le circuit de réception 154 lors des phases d'émission. Si toutefois la technologie de fabrication des éléments 166_k (le cas échéant), 164 et/ou 154 est compatible avec les niveaux de tension +HV et -HV fournis par le circuit d'émission 152, alors les interrupteurs SWk_rx peuvent être omis. Alternativement, les interrupteurs SWk_rx peuvent être remplacés par des circuits de protection adaptés à écrêter les signaux haute tension et à ne laisser passer que les signaux basse tension. A titre d'exemple, chaque circuit de protection peut être constitué d'une association de deux diodes connectées en antiparallèle (tête bêche), une première borne de l'association étant reliée, par exemple connectée à la borne ak correspondante, et la deuxième borne de l'association étant reliée, par exemple connectée, à la masse.

Le circuit de contrôle CTRL est adapté à commander les interrupteurs SWk_rx et SWk_tx via des liaisons de commande non représentées sur la figure.

A titre d'exemple, les différents composants du circuit électronique de commande 120 peuvent être intégrés dans une ou plusieurs puces de circuits intégrés, par exemple en technologie CMOS.

Le fonctionnement du dispositif de la figure 10 est le suivant. Lors d'une phase d'émission d'une onde ultrasonore, le circuit de contrôle CTRL commande, dans chaque circuit 125, la fermeture des interrupteurs SWk_tx et l'ouverture des interrupteurs SWk_rx, et commande de plus le sélecteur répartiteur 162 pour relier les électrodes E1 du ou des transducteurs 103 que l'on souhaite activer à la borne de sortie out_tx du circuit d'émission 152, et pour isoler les électrodes E1 des autres transducteurs de la sous-matrice de la borne out_tx. Lors d'une phase de réception d'une onde ultrasonore, le circuit de contrôle CTRL commande, dans chaque circuit 125, la fermeture des interrupteurs SWk_rx et l'ouverture des interrupteurs SWk_tx, et commande de plus le sélecteur combineur 164 pour relier les électrodes E1 du ou des transducteurs 103 à activer à la borne d'entrée in_rx du circuit de réception 154, et pour isoler les électrodes E1 des autres transducteurs de la sous-matrice de la borne in_rx.

A titre de variante (non représentée), le circuit d'émission 152 est un circuit basse tension, fournissant un signal d'émission basse tension, et le circuit 125 comprend m*n circuits d'amplification haute tension (non représentés) placés respectivement en série avec les m*n interrupteurs SWk_tx, entre les bornes sk_tx et ak. Plus particulièrement, pour chaque transducteur 103 de la sous-matrice 105, le circuit d'amplification correspondant peut avoir une borne d'entrée reliée, par exemple connectée, à la borne sk_tx correspondante, et une borne de sortie reliée à la borne ak correspondante par l'intermédiaire de l'interrupteur SWk_tx de même rang k. Un avantage de cette configuration est que, dans chaque sous-matrice 105, lors d'une phase d'émission, la puissance fournie à chaque transducteur 103 est la même quel que soit le nombre de transducteurs sélectionné dans la sous-matrice.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art.

En particulier, les modes de réalisation décrits ne se limitent pas à l'exemple particulier de réalisation du circuit électronique de commande 120, et notamment des circuits sélecteurs combineurs et/ou sélecteurs répartiteurs 125, décrit en relation avec la figure 10.

De plus, bien que l'on ait décrit ci-dessus, en relation avec les figures 4 à 9, uniquement des exemples de procédés de commande dans lesquels, lors d'une phase d'acquisition d'une image ultrasonore, dans chaque sous-matrice 105 du dispositif, les mêmes transducteurs de la sous-matrice sont activés lors de la phase d'émission d'une onde ultrasonore et lors de la phase subséquente de réception d'un écho de l'onde émise, les modes de réalisation décrits ne se limitent pas à ce cas particulier. Ainsi, on pourra prévoir, par exemple, des procédés d'acquisition dans lesquels les circuits 125 sont commandés de façon que, dans une même sous-matrice 105, le nombre de transducteurs 103 activés pendant la phase d'émission soit différent du nombre de transducteurs 103 activés pendant la phase de réception.

Par ailleurs, bien que l'on ait décrit ci-dessus uniquement des exemples de réalisation dans lesquels, dans chaque sous-matrice 105, les transducteurs 103 de la sous-matrice partagent un même circuit d'émission 152 et un même circuit de réception 154, au moyen d'un circuit sélecteur combineur et sélecteur répartiteur 125, les modes de réalisation décrits ne se limitent pas à ce cas particulier. A titre de variante, on pourra prévoir un dispositif dans lequel, dans chaque sous-matrice 105, les transducteurs 103 de la sous-matrice ont chacun leur propre circuit d'émission et partagent un même circuit de réception via le circuit 125, auquel cas le circuit 125 est un circuit sélecteur combineur seulement, ou dans lequel, dans chaque sous-matrice 105, les transducteurs de la sous-matrice ont chacun leur propre circuit de réception et partagent un même circuit d'émission via le circuit 125, auquel cas le circuit 125 est un circuit sélecteur répartiteur seulement.

De plus, les modes de réalisation décrits ne se limitent pas aux exemples détaillés ci-dessus dans lesquels les sous-matrices 105 ont toutes les mêmes dimensions. A titre de variante, des sous-matrices 105 distinctes de la matrice 100 peuvent avoir des dimensions différentes (c'est-à-dire des nombres de rangées et/ou des nombres de colonnes différents).

## Revendications

1. Dispositif d'imagerie ultrasonore comportant une pluralité de transducteurs ultrasonores (103) agencés en une matrice (100) de plusieurs rangées et plusieurs colonnes, la matrice (100) étant divisée en une pluralité de sous-matrices (105) de transducteurs voisins comportant chacune m rangées et n colonnes, avec m et n entiers supérieurs ou égaux à 2, le dispositif comportant, pour chaque sous-matrice (105) :
- un unique circuit d'émission et/ou de réception (123) ; et
- un circuit sélecteur combineur et/ou sélecteur répartiteur (125) configurable pour relier l'un quelconque, seul, des transducteurs (103) de la sous-matrice (105) au circuit d'émission et/ou de réception (123) de la sous-matrice (105), ou pour relier simultanément plusieurs des transducteurs (103) de la sous-matrice (105) au circuit d'émission et/ou de réception (123) de la sous-matrice (105),
le dispositif comportant en outre un circuit de contrôle (CTRL) adapté à commander individuellement les circuits sélecteurs combineurs et/ou sélecteurs répartiteurs (125) des différentes sous-matrices (105),
**caractérisé en ce que**
le circuit de contrôle (CTRL) est configuré pour, lors d'une phase d'acquisition d'une image ultrasonore d'un premier type, acquérir successivement m*n images partielles d'un corps à analyser, puis reconstruire l'image à partir des m*n images partielles acquises,
le circuit de contrôle (CTRL) étant configuré pour, à chaque acquisition d'une image partielle, dans chaque sous-matrice (105), relier au circuit d'émission et/ou de réception (123) de la sous-matrice un unique transducteur (103) sélectionné parmi les m*n transducteurs de la sous-matrice, et pour modifier le transducteur sélectionné dans chaque sous-matrice à chaque nouvelle acquisition d'une image partielle de façon à balayer les m*n transducteurs de chaque sous-matrice.

2. Dispositif selon la revendication 1, dans lequel le circuit de contrôle (CTRL) est en outre configuré pour, lors d'une phase d'acquisition d'une image ultrasonore d'un deuxième type, commander les circuits sélecteurs combineurs et/ou sélecteurs répartiteurs (125) pour, simultanément :
- dans une première sous-matrice (105), relier un unique transducteur (103) de la sous-matrice (105) au circuit d'émission et/ou de réception (123) de la sous-matrice ; et
- dans une deuxième sous-matrice (105), relier plusieurs transducteurs (103) de la sous-matrice (105) au circuit d'émission et/ou de réception (123) de la sous-matrice.

3. Dispositif selon la revendication 1 ou 2, dans lequel le circuit de contrôle (CTRL) est en outre configuré pour, lors d'une phase d'acquisition d'une image ultrasonore d'un troisième type, commander les circuits sélecteurs combineurs et/ou sélecteurs répartiteurs (125) pour, dans chaque sous-matrice (105), relier simultanément tous les transducteurs (103) de la sous-matrice (105) au circuit d'émission et/ou de réception (123) de la sous-matrice (105) .

4. Dispositif selon l'une quelconque des revendications 1 à 3, dans lequel le circuit de contrôle (CTRL) est en outre configuré pour, lors d'une phase d'acquisition d'une image ultrasonore d'un quatrième type, commander les circuits sélecteurs combineurs et/ou sélecteurs répartiteurs (125) pour, dans chaque sous-matrice (105), successivement :
- relier simultanément tous les transducteurs (103) d'une même colonne de la sous-matrice (105) au circuit d'émission et/ou de réception (123) de la sous-matrice (105) et isoler simultanément les autres transducteurs (103) de la sous-matrice (105) du circuit d'émission et/ou de réception (123) de la sous-matrice (105) ;
- relier simultanément tous les transducteurs (103) d'une même rangée de la sous-matrice (105) au circuit d'émission et/ou de réception (123) de la sous-matrice (105) et isoler simultanément les autres transducteurs (103) de la sous-matrice (105) du circuit d'émission et/ou de réception (123) de la sous-matrice (105) ; et
- relier simultanément tous les transducteurs (103) d'une même diagonale de la sous-matrice (105) au circuit d'émission et/ou de réception (123) de la sous-matrice (105) et isoler simultanément les autres transducteurs (103) de la sous-matrice (105) du circuit d'émission et/ou de réception (123) de la sous-matrice (105).

5. Dispositif selon l'une quelconque des revendications 1 à 4, dans lequel chaque circuit d'émission et/ou de réception (123) comprend un circuit d'émission (152) et un circuit de réception (154).

6. Dispositif selon la revendication 5, dans lequel, pour chaque sous-matrice (105), le circuit sélecteur combineur et/ou sélecteur répartiteur (125) comprend un sélecteur répartiteur d'émission (162) de une borne d'entrée (e_tx) vers m*n bornes de sortie (sk_tx), et un sélecteur combineur de réception (164) de m*n bornes d'entrée (ek_rx) vers une borne de sortie (sk_rx), et dans lequel :
- la borne d'entrée (e_tx) du sélecteur répartiteur d'émission (162) est reliée à une borne de sortie (out_tx) du circuit d'émission (152) ;
- les m*n bornes de sortie (sk_tx) du sélecteur répartiteur d'émission (162) sont reliées respectivement aux m*n transducteurs (103) de la sous-matrice (105) ;
- les m*n bornes d'entrée (ek_rx) du sélecteur combineur de réception (164) sont reliées respectivement aux m*n transducteurs (103) de la sous-matrice (105) ; et
- la borne de sortie (sk_rx) du sélecteur combineur de réception (164) est reliée à une borne d'entrée (in_rx) du circuit de réception (154).

7. Dispositif selon la revendication 6, dans lequel, dans chaque circuit sélecteur répartiteur (125), les m*n bornes de sortie (sk_tx) du sélecteur répartiteur d'émission (162) sont reliées aux m*n transducteurs (103) de la sous-matrice (105) par respectivement m*n interrupteurs d'émission (SWk_tx), et dans lequel, dans chaque circuit sélecteur combineur (125), les m*n bornes d'entrée (ek_rx) du sélecteur combineur de réception (164) sont reliées aux m*n transducteurs (103) de la sous-matrice (105) par respectivement m*n interrupteurs de réception (SWk_rx).

8. Dispositif selon la revendication 7, dans lequel, dans chaque circuit sélecteur répartiteur (125), les m*n bornes d'entrée (ek_rx) du sélecteur combineur de réception (164) sont en outre reliées aux m*n transducteurs (103) de la sous-matrice (105) par respectivement m*n préamplificateurs (166_k).

9. Dispositif selon l'une quelconque des revendications 5 à 8, dans lequel le circuit de contrôle (CTRL) est configuré pour commander les circuits sélecteurs combineurs et/ou sélecteurs répartiteurs (125) de façon à, lors d'une phase d'acquisition d'une image ultrasonore, dans chaque sous-matrice (105), pendant une phase d'émission (152) d'une onde ultrasonore, relier un premier jeu de transducteurs ultrasonores (103) de la sous-matrice (105) au circuit d'émission (152) de la sous-matrice (105), et, pendant une phase subséquente de réception d'une onde ultrasonore, relier un deuxième jeu de transducteurs ultrasonores (103) de la sous-matrice (105), différent du premier jeu, au circuit de réception (154) de la sous-matrice (105).

## Patentansprüche

1. Ultraschall-Bildgebungsvorrichtung, die Folgendes aufweist:
eine Vielzahl von Ultraschallwandlern (103), die in einer Anordnung (100) aus einer Vielzahl von Reihen (Ri) und einer Vielzahl von Spalten (Cj) angeordnet sind, wobei die Anordnung (100) in eine Vielzahl von Sub-Anordnungen (105) benachbarter Wandler unterteilt ist, die jeweils m Reihen und n Spalten aufweisen, wobei m und n ganze Zahlen größer oder gleich 2 sind, wobei die Vorrichtung für jedes Sub-Anordnung (105) Folgendes aufweist:
- eine einzelne Sende- und/oder Empfangsschaltung (123); und
- eine Kombinierer-Auswahlschaltung und/oder Verteiler-Auswahlschaltung (125), die so konfigurierbar ist, jeden, und zwar einzeln, der Wandler (103) der Sub-Anordnung (105) mit der Sende- und/oder Empfangsschaltung (123) der Sub-Anordnung (105) zu koppeln, oder dass sie gleichzeitig eine Vielzahl der Wandler (103) der Sub-Anordnung (105) mit der Sende- und/oder Empfangsschaltung (123) der Sub-Anordnung (105) koppelt,
wobei die Vorrichtung ferner eine Steuerschaltung (CTRL) aufweist, die eingerichtet ist, die Kombinierer-Auswahlschaltung und/oder Verteiler-Auswahlschaltung (125) der verschiedenen Sub-Anordnungen (105) einzeln zu steuern,
**dadurch gekennzeichnet, dass** die Steuerschaltung (CTRL) eingerichtet ist, und zwar während einer Phase der Erfassung eines Ultraschallbildes eines ersten Typs, nacheinander m*n Teilbilder eines zu analysierenden Körpers zu erfassen, und dann das Bild aus den m*n erfassten Teilbildern zu rekonstruieren,
wobei die Steuerschaltung (CTRL) eingerichtet ist, bei jeder Erfassung eines Teilbildes, und zwar in jeder Sub-Anordnung (105), einen einzigartigen Wandler (103), der aus den m*n Wandlern der Sub-Anordnung ausgewählt ist, mit der Sende- und/oder Empfangsschaltung (123) der Sub-Anordnung zu koppeln, und den in jeder Sub-Anordnung ausgewählten Wandler für jede neue Erfassung eines Teilbildes zu ändern, und zwar derart, dass die m*n Wandler jeder Sub-Anordnung abgetastet werden.

2. Vorrichtung nach Anspruch 1, wobei die Steuerschaltung (CTRL) ferner eingerichtet ist, während einer Phase der Erfassung eines Ultraschallbildes eines zweiten Typs, die Kombinierer-Auswahlschaltung und/oder Verteiler-Auswahlschaltung (125) zu steuern, gleichzeitig:
- und zwar in einer ersten Sub-Anordnung (105), einen einzelnen Wandler (103) der Sub-Anordnung (105) mit der Sende- und/oder Empfangsschaltung (123) der Sub-Anordnung zu koppeln; und
- und zwar in einer zweiten Sub-Anordnung (105), eine Vielzahl von Wandlern (103) der Sub-Anordnung (105) mit der Sende- und/oder Empfangsschaltung (123) der Sub-Anordnung zu koppeln.

3. Vorrichtung nach Anspruch 1 oder 2, wobei die Steuerschaltung (CTRL) ferner eingerichtet ist, während einer Phase der Erfassung eines Ultraschallbildes eines dritten Typs, die Kombinierer-Auswahlschaltung und/oder Verteiler-Auswahlschaltung (125) zu steuern, und zwar in jeder Sub-Anordnung (105), gleichzeitig alle Wandler (103) der Sub-Anordnung (105) mit der Sende- und/oder Empfangsschaltung (123) der Sub-Anordnung (105) zu koppeln.

4. Vorrichtung nach einem der Ansprüche 1 bis 3, wobei die Steuerschaltung (CTRL) ferner eingerichtet ist, während einer Phase der Erfassung eines Ultraschallbildes eines vierten Typs, die Kombinierer-Auswahlschaltung und/oder Verteiler-Auswahlschaltung (125) zu steuern, in jeder Sub-Anordnung (105) nacheinander:
- gleichzeitig alle Wandler (103) einer gleichen Spalte der Sub-Anordnung (105) an die Sende- und/oder Empfangsschaltung (123) der Sub-Anordnung (105) zu koppeln und gleichzeitig die anderen Wandler (103) der Sub-Anordnung (105) von der Sende- und/oder Empfangsschaltung (123) der Sub-Anordnung (105) zu isolieren;
- gleichzeitig alle Wandler (103) einer gleichen Reihe der Sub-Anordnung (105) mit der Sende- und/oder Empfangsschaltung (123) der Sub-Anordnung (105) zu koppeln und gleichzeitig die anderen Wandler (103) der Sub-Anordnung (105) von der Sende- und/oder Empfangsschaltung (123) der Sub-Anordnung (105) zu isolieren; und
- gleichzeitig alle Wandler (103) einer gleichen Diagonalen der Sub-Anordnung (105) mit der Sende- und/oder Empfangsschaltung (123) der Sub-Anordnung (105) zu koppeln und gleichzeitig die anderen Wandler (103) der Sub-Anordnung (105) von der Sende- und/oder Empfangsschaltung (123) der Sub-Anordnung (105) zu isolieren.

5. Vorrichtung nach einem der Ansprüche 1 bis 4, wobei jede Sende- und/oder Empfangsschaltung (123) eine Sendeschaltung (152) und eine Empfangsschaltung (154) aufweist.

6. Vorrichtung nach Anspruch 5, wobei, und zwar für jede Sub-Anordnung (105), die Kombinierer-Auswahlschaltung und/oder Verteiler-Auswahlschaltung (125) einen Sende-Verteiler-Auswähler (162) von einem Eingangsanschluss (e_tx) zu m*n Ausgangsanschlüssen (sk_tx) und einen Empfang-Kombinierer-Auswähler (164) von m*n Eingangsanschlüssen (ek_rx) zu einem Ausgangsanschluss (sk_rx) aufweist, und wobei:
- der Eingangsanschluss (e_tx) des Sende-Verteiler-Auswählers (162) mit einem Ausgangsanschluss (out_tx) der Sendeschaltung (152) gekoppelt ist;
- die m*n Ausgangsanschlüsse (sk_tx) des Sende-Verteiler-Auswählers (162) jeweils mit den m*n Wandlern (103) der Sub-Anordnung (105) gekoppelt sind;
- die m*n Eingangsanschlüsse (ek_rx) des Empfang-Kombinierer-Auswählers (164) jeweils mit den m*n Wandlern (103) der Sub-Anordnung (105) gekoppelt sind; und
- der Ausgangsanschluss (sk_rx) des Empfang-Kombinierer-Auswählers (164) mit einem Eingangsanschluss (in_rx) der Empfangsschaltung (154) gekoppelt ist.

7. Vorrichtung nach Anspruch 6, wobei, und zwar in jeder Verteiler-Auswahlschaltung (125), die m*n Ausgangsanschlüsse (sk_tx) des Sende-Verteiler-Auswählers (162) mit den m*n Wandlern (103) der Sub-Anordnung (105) durch jeweils m*n Sende-Schaltern (SWk_tx) gekoppelt sind, und wobei, und zwar in jeder Kombinierer-Auswahlschaltung (125), die m*n Eingangsanschlüsse (ek_rx) des Empfang-Kombinierer-Auswählers (164) mit den m*n Wandlern (103) der Sub-Anordnung (105) durch jeweils m*n Empfang-Schaltern (SWk_rx) gekoppelt sind.

8. Vorrichtung nach Anspruch 7, wobei, und zwar in jeder Verteiler-Auswahlschaltung (125), die m*n Eingangsanschlüsse (ek_rx) des Empfang-Kombinierer-Auswählers (164) ferner mit den m*n Wandlern (103) der Sub-Anordnung (105) durch jeweils m*n Vorverstärker (166_k) gekoppelt sind.

9. Vorrichtung nach einem der Ansprüche 5 bis 8, wobei die Steuerschaltung (CTRL) eingerichtet ist, die Kombinierer-Auswahlschaltung und/oder Verteiler-Auswahlschaltung (125) zu steuern, und zwar während einer Ultraschallbild-Erfassungsphase, in jeder Sub-Anordnung (105), und zwar während einer Ultraschallwellen-Übertragungsphase (152), einen ersten Satz von Ultraschallwandlern (103) der Sub-Anordnung (105) mit der Sendeschaltung (152) der Sub-Anordnung (105) zu koppeln, und, und zwar während einer nachfolgenden Phase des Empfangs einer Ultraschallwelle, einen zweiten Satz von Ultraschallwandlern (103) der Sub-Anordnung (105), der sich vom ersten Satz unterscheidet, mit der Empfangsschaltung (154) der Sub-Anordnung (105) zu koppeln.

## Claims

1. Ultrasonic imaging device comprising a plurality of ultrasonic transducers (103) arranged in an array (100) of a plurality of rows (Ri) and a plurality of columns (Cj), the array (100) being divided into a plurality of sub-arrays (105) of neighboring transducers, each comprising m rows and n columns, m and n being integers greater than or equal to 2, the device comprising, for each sub-array (105) :
- a single transmit and/or receive circuit (123); and
- a combiner selector and/or splitter selector circuit (125) configurable to couple any, alone, of the transducers (103) of the sub-array (105) to the transmit and/or receive circuit (123) of the sub-array (105), or to simultaneously couple a plurality of the transducers (103) of the sub-array (105) to the transmit and/or receive circuit (123) of the sub-array (105),
the device further comprising a control circuit (CTRL) adapted to individually controlling the combiner selector and/or splitter selector circuits (125) of the different sub-arrays (105),
**characterized in that** the control circuit (CTRL) is configured to, during a phase of acquisition of an ultrasonic wave of a first type, successively acquire m*n partial images of a body to be analyzed, and then reconstruct the image from the m*n acquired partial images, the control circuit (CTRL) being configured to, at each acquisition of a partial image, in each sub-array (105), coupled to the transmit and/or receive circuit (123) of the sub-array a single transducer (103) selected among the m*n transducers of the sub-array, and to modify the transducer selected in each sub-array for each new acquisition of a partial image to involve the m*n transducers of each sub-array.

2. Device according to claim 1, wherein the control circuit (CTRL) is further configured to, during a phase of acquisition of an ultrasonic wave of a second type, control the combiner selector and/or splitter selector circuits (125) to, simultaneously:
- in a first sub-array (105), couple a single transducer (103) of the sub-array (105) to the transmit and/or receive circuit (123) of the sub-array; and
- in a second sub-array (105), couple a plurality of transducers (103) of the sub-array (105) to the transmit and/or receive circuit (123) of the sub-array.

3. Device according to claim 1 or 2, wherein the control circuit (CTRL) is further configured to, during a phase of acquisition of an ultrasonic image of a third type, control the combiner selector and/or splitter selector circuits (125) to, in each sub-array (105), simultaneously couple all the transducers (103) of the sub-array (105) to the transmit and/or receive circuit (123) of the sub-array (105) .

4. Device according to any of claims 1 to 3, wherein the control circuit (CTRL) is further configured to, during a phase of acquisition of an ultrasonic wave of a fourth type, control the combiner selector and/or splitter selector circuits (125) to, in each sub-array (105), successively:
- simultaneously couple all the transducers (103) of a same column of the sub-array (105) to the transmit and/or receive circuit (123) of the sub-array (105) and simultaneously isolate the other transducers (103) of the sub-array (105) from the transmit and/or receive circuit (123) of the sub-array (105);
- simultaneously couple all the transducers (103) of a same row of the sub-array (105) to the transmit and/or receive circuit (123) of the sub-array (105) and simultaneously isolate the other transducers (103) of the sub-array (105) from the transmit and/or receive circuit (123) of the sub-array (105); and
- simultaneously couple all the transducers (103) of a same diagonal of the sub-array (105) to the transmit and/or receive circuit (123) of the sub-array (105) and simultaneously isolate the other transducers (103) of the sub-array (105) from the transmit and/or receive circuit (123) of the sub-array (105).

5. Device according to any of claims 1 to 4, wherein each transmit and/or receive circuit (123) comprises a transmit circuit (152) and a receive circuit (154).

6. Device according to claim 5, wherein, for each sub-array (105), the combiner selector and/or splitter selector circuit (125) comprises a transmit splitter selection (162) from one input terminal (e_tx) to m*n output terminals (sk_tx) and a receive combiner selector (164) from m*n input terminals (ek_rx) to one output terminal (sk_rx), and wherein:
- the input terminal (e_tx) of the transmit splitter selector (162) is coupled to an output terminal (out_tx) of the transmit circuit (152);
- the m*n output terminals (sk_tx) of the transmit splitter selector (162) are respectively coupled to the m*n transducers (103) of the sub-array (105);
- the m*n input terminals (ek_rx) of the receive combiner selector (164) are respectively coupled to the m*n transducers (103) of the sub-array (105); and
- the output terminal (sk_rx) of the receive combiner selector (164) is coupled to an input terminal (in_rx) of the receive circuit (154).

7. Device according to claim 6, wherein, in each splitter selector circuit (125), the m*n output terminals (sk_tx) of the transmit splitter selector (162) are coupled to the m*n transducers (103) of the sub-array (105) by respectively m*n transmit switches (SWk_tx), and wherein, in each combiner selector circuit (125), the m*n input terminals (ek_rx) of the receive selector combiner (164) are coupled to the m*n transducers (103) of the sub-array (105) by respectively m*n receive switches (SWk_rx).

8. Device according to claim 7, wherein, in each splitter selector circuit (125), the m*n input terminals (ek_rx) of the receive combiner selector (164) are further coupled to the m*n transducers (103) of the sub-array (105) by respectively m*n preamplifiers (166_k).

9. Device according to any of claims 5 to 8, wherein the control circuit (CTRL) is configured to control the combiner selector and/or splitter selector circuits (125) to, during an ultrasonic image acquisition phase, in each sub-array (105), during an ultrasonic wave transmission phase (152), couple a first set of ultrasonic transducers (103) of the sub-array (105) to the transmit circuit (152) of the sub-array (105), and, during a subsequent phase of reception of an ultrasonic wave, couple a second set of ultrasonic transducers (103) of the sub-array (105), different from the first set, to the receive circuit (154) of the sub-array (105).
